# DEMANDE DE BREVET EUROPEEN

(11) **EP 4 403 464 A1**
(43) Date de publication de la demande: **24.07.2024**
(21) Numéro de dépôt: 24152020.4
(22) Date de dépôt: 16.01.2024
(51) Int. Cl.: B64C 13/40, F15B 13/08, F15B 15/20, F15B 15/14

(54) **SERVOCOMMANDE DESTINÉE AU CONTRÔLE DE LA POSITION D'UN ÉLÉMENT MOBILE D'UN AÉRONEF**

(30) Priorité: 18.01.2023 FR 2300458
(71) Demandeur: Dassault Aviation, 75008 Paris (FR)
(72) Inventeur: LE ROUX, Xavier, 92214 SAINT CLOUD (FR)
(74) Mandataire: Lavoix

(57) **Abrégé**

La servocommande comporte :
- un dispositif de pilotage configuré pour contrôler un dispositif de puissance en fonction d'une commande de déplacement, le dispositif de pilotage (60) comprenant une unité de pilotage (62) comportant :
+ un ensemble d'accessoires électroniques, mécaniques et/ou hydrauliques (70) en communication fluidique avec le vérin hydraulique ; et
+ un corps (72) délimitant un réseau de cavités tubulaires (98) connectant fluidiquement les accessoires électroniques, mécaniques et/ou hydraulique (70), le corps (72) comprenant une surface externe (90), au moins une première portion de raccord entre le réseau et un vérin hydraulique et au moins une deuxième portion de raccord entre le réseau et le vérin hydraulique, une fibre neutre (100) étant définie pour chaque cavité tubulaire (98).

La fibre neutre (100) d'au moins une cavité tubulaire (98) est courbe.

## Description

La présente invention concerne une servocommande destinée au contrôle de la position d'un élément mobile d'un aéronef.

La présente invention concerne en outre une architecture de commande de la position de l'élément mobile, comprenant une telle servocommande et un procédé de réalisation de la servocommande.

De manière connue, les servocommandes d'aéronef sont destinées au contrôle précis de la position d'un élément mobile de l'aéronef, en particulier celle d'une gouverne de l'aéronef, notamment une gouverne de profondeur ou de direction située sur la dérive, ou encore celle d'ailerons ou de volets situés sur les ailes.

De telles servocommandes comprennent un dispositif de puissance lié mécaniquement à l'élément mobile et un dispositif de pilotage recevant les commandes de vol et pilotant le dispositif de puissance en fonction de ces commandes. Le dispositif de puissance comprend au moins un vérin hydraulique apte à coopérer avec l'élément mobile et le dispositif de pilotage comprend au moins une unité de pilotage connectée fluidiquement, mécaniquement et électriquement au vérin hydraulique.

Usuellement, l'unité de pilotage comprend un corps délimitant un réseau de cavité tubulaires connectant fluidiquement des accessoires électroniques, mécaniques et/ou hydrauliques ainsi que le vérin hydraulique. Dans de telles servocommandes, les cavités tubulaires sont directement creusées dans le corps, notamment par usinage.

Ces servocommandes connues ne donnent toutefois pas entière satisfaction. En effet, une unité de pilotage d'une telle servocommande comprend usuellement un réseau complexe de cavités tubulaires connectant de nombreux accessoires électroniques, mécaniques et/ou hydrauliques ainsi que le vérin. Afin de pouvoir délimiter l'ensemble des nombreuses cavités tubulaires nécessaires, le corps est volumineux et présente donc une masse importante. En outre, lorsque les cavités ne sont pas droites, il est nécessaire d'effectuer de nombreux perçages pour créer des chemins linéaires sécants (généralement à 90°), ce qui augmente encore le volume nécessaire du corps.

Cependant, le poids et l'encombrement des servocommandes doit respecter un cahier des charges très stricte notamment en fonction de leur emplacement au sein de l'aéronef. Il existe donc un besoin de réduire l'encombrement et la masse des servocommandes de l'état de la technique.

Un objectif de l'invention est alors de fournir une servocommande dont la masse et l'encombrement sont réduits.

A cet effet, l'invention a pour objet une servocommande destinée au contrôle de la position d'un élément mobile d'un aéronef, comprenant :
- un dispositif de puissance configuré pour déplacer l'élément mobile, le dispositif de puissance comprenant au moins un vérin hydraulique s'étendant selon un axe de vérin ; et
- un dispositif de pilotage configuré pour contrôler le dispositif de puissance en fonction d'une commande de déplacement de l'élément mobile reçue depuis un dispositif de génération de la commande de déplacement de l'élément mobile, le dispositif de pilotage comprenant au moins une unité de pilotage comportant :
   + un ensemble d'accessoires électroniques, mécaniques et/ou hydrauliques en communication fluidique avec le vérin hydraulique ; et
   + un corps délimitant un réseau de cavités tubulaires connectant fluidiquement les accessoires électroniques, mécaniques et/ou hydraulique ainsi que le vérin hydraulique, le corps comprenant une surface externe, au moins une première portion de raccord entre le réseau et le vérin hydraulique et au moins une deuxième portion de raccord entre le réseau et le vérin hydraulique, une fibre neutre étant définie pour chaque cavité tubulaire ;
   dans lequel la fibre neutre d'au moins une cavité tubulaire est courbe.

Selon des modes de réalisation particuliers de l'invention, la servocommande présente également l'une ou plusieurs des caractéristiques suivantes, prise(s) isolément ou suivant toute(s) combinaison(s) techniquement possible(s) :
- le corps de l'au moins une unité de pilotage est réalisé par fabrication additive ;
- au moins une partie du vérin est réalisée en un premier matériau, le corps de l'au moins une unité de pilotage étant réalisé en un deuxième matériau distinct du premier matériau ;
- le premier matériau est un alliage d'aluminium, le deuxième matériau étant un alliage de titane ;
- le rayon de courbure de l'au moins une fibre neutre courbe est continûment dérivable ;
- chaque cavité tubulaire est dépourvue d'arête vive entre ses extrémités ;
- au moins une cavité tubulaire, notamment l'au moins une cavité tubulaire dont la fibre neutre est courbe, est dépourvue de bifurcation et/ou de piquage entre ses extrémités ;
- chaque cavité tubulaire s'étend entre deux extrémités respectivement de connexion à :
- l'au moins une première portion de raccord ;
- l'au moins une deuxième portion de raccord ; ou
- un accessoire électronique, mécanique et/ou hydraulique ;
   l'au moins une fibre neutre courbe s'étendant selon le chemin le plus court entre ses deux extrémités, le chemin le plus court étant restreint par la présence des autres cavités tubulaires, des accessoires électroniques, mécaniques et/ou hydrauliques et de la surface externe ;
- le corps comprend au moins une portion conformée, la surface externe de la portion conformée épousant la forme d'au moins un accessoire électronique, mécanique et/ou hydraulique et/ou d'au moins une cavité tubulaire, notamment de l'au moins une cavité tubulaire dont la fibre neutre est courbe ; et
- la portion conformée du corps présente une épaisseur, prise orthogonalement par rapport à la surface externe de la portion conformée entre la surface externe et :
- la cavité tubulaire la plus proche ; ou
- l'accessoire électronique, mécanique et/ou hydraulique le plus proche ;
l'épaisseur étant comprise entre 1 mm et 10 mm, de préférence entre 1 mm et 5 mm.

L'invention concerne en outre une architecture de commande de la position d'un élément mobile d'un aéronef, comprenant :
- un dispositif de génération d'une commande de déplacement de l'élément mobile configuré pour générer une commande de déplacement de l'élément mobile ; et
- une servocommande telle que définie plus haut, destinée au contrôle de la position de l'élément mobile, en fonction de la commande de déplacement de l'élément mobile.

Également, l'invention concerne un procédé de réalisation d'une servocommande telle que décrite ci-dessus, comprenant les étapes suivantes :
- formation d'au moins un vérin hydraulique du dispositif de puissance ;
- réalisation d'une ébauche du corps de l'au moins une unité de pilotage par fabrication additive de sorte qu'au moins une cavité tubulaire présente une fibre neutre courbe ;
- réalisation du corps de l'au moins une unité de pilotage par usinage de l'ébauche ;
- formation de l'au moins unité de pilotage du dispositif de pilotage par installation des accessoires électroniques, mécaniques et/ou hydrauliques dans le corps ;
- assemblage du dispositif de puissance et du dispositif de pilotage pour former la servocommande.

Selon des modes de réalisation particuliers de l'invention, le procédé de réalisation de la servocommande présente également l'une ou plusieurs des caractéristiques suivantes, prise(s) isolément ou suivant toute(s) combinaison(s) techniquement possible(s) :
- l'étape de réalisation de l'ébauche du corps de l'au moins une unité de pilotage est dépourvue d'utilisation de support de fabrication additive ;
- l'ébauche du corps s'étend selon une direction principale de l'arrière vers l'avant, la direction principale étant parallèle à l'axe de vérin lorsque le dispositif de puissance et le dispositif de pilotage sont assemblés,
   la fabrication additive étant réalisée suivant la direction principale de l'arrière vers l'avant lors de l'étape de réalisation de l'ébauche du corps de l'au moins une unité de pilotage,
   l'ébauche du corps présentant au moins portion en porte-à-faux,
   toute surface de l'au moins une portion en porte-à-faux orientée sensiblement vers l'arrière par rapport à la direction principale présentant un angle avec la direction principale inférieur ou égal à 45° ; et
- lors de la réalisation du corps de l'au moins une unité de pilotage, les surfaces de l'au moins une portion en porte-à-faux orientées sensiblement vers l'arrière par rapport à la direction principale sont usinées pour leur conférer leur forme finale.

L'invention a également pour objet une servocommande destinée au contrôle de la position d'un élément mobile d'un aéronef, comprenant :
- un dispositif de puissance configuré pour déplacer l'élément mobile, le dispositif de puissance comprenant au moins un vérin hydraulique s'étendant selon un axe de vérin ; et
- un dispositif de pilotage configuré pour contrôler le dispositif de puissance en fonction d'une commande de déplacement de l'élément mobile reçue depuis un dispositif de génération de la commande de déplacement de l'élément mobile, le dispositif de pilotage comprenant au moins une unité de pilotage comportant :
   + un ensemble d'accessoires électroniques, mécaniques et/ou hydrauliques en communication fluidique avec le vérin hydraulique ; et
   + un corps délimitant un réseau de cavités tubulaires connectant fluidiquement les accessoires électroniques, mécaniques et/ou hydrauliques ainsi que le vérin hydraulique, une fibre neutre étant définie pour chaque cavité tubulaire ;
   au moins une partie de l'au moins un vérin hydraulique est réalisée en un premier matériau, le corps de l'au moins une unité de pilotage étant réalisée en un deuxième matériau distinct du premier matériau.

Selon des modes de réalisation particuliers de l'invention, la servocommande présente également l'une ou plusieurs des caractéristiques suivantes, prise(s) isolément ou suivant toute(s) combinaison(s) techniquement possible(s) :
- la fibre neutre d'au moins une cavité tubulaire est courbe ;
- le corps de l'au moins une unité de pilotage est réalisé par fabrication additive ;
- le premier matériau est un alliage d'aluminium, le deuxième matériau étant un alliage de titane ;
- un dispositif de raccord entre le dispositif de puissance et le dispositif de pilotage, le dispositif de raccord comportant au moins une pièce de raccord entre le réseau de cavités tubulaires et le vérin hydraulique, l'au moins une pièce de raccord étant mobile par rapport au corps de l'unité de pilotage et/ou par rapport au vérin hydraulique pour autoriser la dilatation différentielle du corps de l'unité de pilotage et du vérin hydraulique l'un par rapport à l'autre ;
- le vérin hydraulique comprend un cylindre s'étendant selon l'axe de vérin et délimitant une chambre, une tige s'étendant selon l'axe de vérin dans la chambre et un piston monté sur la tige dans la chambre,
   au moins l'un entre le cylindre du vérin hydraulique et le corps de l'unité de pilotage comprenant une cavité cylindrique de raccord en communication fluidique avec respectivement le réseau de cavités tubulaires ou la chambre du vérin hydraulique,
   l'au moins une pièce de raccord étant agencée de sorte à être déplaçable en translation dans la cavité cylindrique de raccord lors de la dilatation différentielle du corps de l'unité de pilotage et du vérin hydraulique l'un par rapport à l'autre ;
- la cavité cylindrique de raccord s'étend selon un axe sensiblement parallèle à l'axe de vérin, l'au moins une pièce de raccord étant déplaçable en translation dans la cavité cylindrique de raccord selon l'axe de vérin ;
- la cavité cylindrique de raccord est délimitée par une paroi interne,
   l'au moins une pièce de raccord comprenant une portion cylindrique délimitant une conduite de raccord et s'étendant dans la cavité cylindrique de raccord, et au moins une saillie annulaire coopérant avec la paroi interne de la cavité cylindrique de raccord pour connecter de manière étanche le réseau de cavités tubulaires de l'unité de pilotage et le vérin hydraulique ; et
- le dispositif de puissance comprend au moins un vérin hydraulique supplémentaire identique au vérin hydraulique et s'étendant selon un axe de vérin supplémentaire sensiblement parallèle à l'axe de vérin ; et
- le dispositif de pilotage comprend au moins une unité de pilotage supplémentaire identique à l'unité de pilotage, l'au moins une unité de pilotage supplémentaire étant associée à l'au moins un vérin hydraulique supplémentaire ;
- la fibre neutre courbe présente une courbure continûment dérivable ;
- l'au moins une cavité tubulaire dont la fibre neutre est courbe est dépourvue d'arêtes vives entre ses extrémités ;
- au moins une cavité tubulaire, notamment l'au moins une cavité tubulaire dont la fibre neutre est courbe, est dépourvue de bifurcation et/ou de piquage entre ses extrémités ;
- le dispositif de raccord comprenant en outre au moins deux vis, la pièce de raccord comprend en outre deux ailes chacune formée par une plaque comprenant un orifice de passage de la vis, le dispositif de puissance et le dispositif de pilotage comprenant chacun au moins deux orifices de passage de vis, chaque vis s'étendant à travers les orifices de passages du dispositif de puissance, du dispositif de pilotage et du dispositif de raccord ;

L'invention concerne en outre une architecture de commande de la position d'un élément mobile d'un aéronef, comprenant :
- un dispositif de génération d'une commande de déplacement de l'élément mobile configuré pour générer une commande de déplacement de l'élément mobile ; et
- une servocommande telle que définie ci-dessus destinée au contrôle de la position de l'élément mobile, en fonction de la commande de déplacement de l'élément mobile.

Également, l'invention concerne un procédé de réalisation d'une servocommande telle que décrite ci-dessus, comprenant les étapes suivantes :
- formation d'au moins un vérin hydraulique du dispositif de puissance par usinage d'au moins un bloc du premier matériau ;
- réalisation d'une ébauche du corps de l'au moins une unité de pilotage par fabrication additive à partir du deuxième matériau ;
- réalisation du corps de l'au moins une unité de pilotage par usinage de l'ébauche ;
- formation de l'au moins une unité de pilotage du dispositif de pilotage par installation des accessoires électroniques, mécaniques et/ou hydrauliques dans le corps ;
- assemblage du dispositif de puissance et du dispositif de pilotage pour former la servocommande.

Selon des modes de réalisation particuliers de l'invention, le procédé de réalisation de la servocommande présente également l'une ou plusieurs des caractéristiques suivantes, prise(s) isolément ou suivant toute(s) combinaison(s) techniquement possible(s) :
- l'ébauche du corps comprend au moins une cavité tubulaire dont la fibre neutre est courbe ; et
- l'étape d'assemblage comprend l'agencement d'au moins un dispositif de raccord entre le dispositif de puissance et le dispositif de pilotage, l'agencement de l'au moins un dispositif de raccord comprenant l'agencement d'une pièce de raccord entre le réseau de cavités tubulaires et le vérin hydraulique, l'au moins une pièce de raccord étant mobile par rapport au corps de l'unité de pilotage et/ou par rapport au vérin hydraulique pour autoriser la dilatation différentielle du corps de l'unité de pilotage et du vérin hydraulique l'un par rapport à l'autre.

En outre, l'invention concerne une série de servocommandes telles que décrites ci-dessous :
- chaque servocommande est destinée au contrôle de la position d'un élément mobile de l'aéronef, chaque servocommande comprenant un dispositif de puissance et un dispositif de pilotage, ledit dispositif de pilotage et ledit dispositif de puissance étant aptes à être assemblés pour former, dans une configuration assemblée, ladite servocommande, la série comprenant une première servocommande et une deuxième servocommande distincte de la première servocommande, le dispositif de puissance de la deuxième servocommande étant identique au dispositif de puissance de la première servocommande, le dispositif de pilotage de la deuxième servocommande étant différent du dispositif de pilotage de la première servocommande, ou/et
la série comprenant une troisième servocommande distincte de la première servocommande, le dispositif de puissance de la troisième servocommande étant différent du dispositif de puissance de la première servocommande, le dispositif de pilotage de la troisième servocommande étant identique au dispositif de pilotage de la première servocommande.

Selon des modes de réalisation particuliers de l'invention, la série de servocommande présente également l'une ou plusieurs des caractéristiques suivantes, prise(s) isolément ou suivant toute(s) combinaison(s) techniquement possible(s) :
- le vérin hydraulique de chaque dispositif de puissance comprend une première rotule fixe en translation selon l'axe de vérin et une deuxième rotule destinée à être solidaire de l'élément mobile et mobile en translation selon l'axe de vérin, la première rotule étant mobile en rotation autour d'un premier axe de rotation sensiblement orthogonal à l'axe de vérin, la deuxième rotule étant mobile en rotation autour d'un deuxième axe de rotation sensiblement orthogonal à l'axe de vérin, les premier et deuxième axes de rotation étant séparés selon l'axe de vérin par une entraxe, le dispositif de puissance de la première servocommande présentant au moins une caractéristique différenciante par rapport au dispositif de puissance de la troisième servocommande, l'au moins une caractéristique différenciante étant prise dans la liste de caractéristiques différenciantes suivante :
   - le diamètre du vérin hydraulique ; et/ou
   - la course du vérin hydraulique ;
   - l'entraxe ; et
   - le corps de l'unité de pilotage de la première servocommande est identique au corps de l'unité de pilotage de la deuxième servocommande, l'ensemble d'accessoires électroniques, mécaniques et/ou hydrauliques de l'unité de pilotage de la première servocommande étant distinct de l'ensemble d'accessoires électroniques, mécaniques et/ou hydrauliques de l'unité de pilotage de la deuxième servocommande.

Également, l'invention concerne un procédé de réalisation d'une série de servocommandes, la série étant telle que décrite ci-dessous :
- mise à disposition d'une pluralité de dispositifs de puissance distincts ;
- mise à disposition d'une pluralité de dispositifs de pilotage distincts ;
- assemblage d'une première combinaison d'un dispositif de puissance parmi la pluralité de dispositifs de puissance distincts et d'un dispositif de pilotage parmi la pluralité de dispositifs de pilotage distincts pour former une première servocommande ;
- assemblage d'une deuxième combinaison d'un dispositif de puissance parmi la pluralité de dispositifs de puissance distincts et d'un dispositif de pilotage parmi la pluralité de dispositifs de pilotage distincts pour former une deuxième servocommande, la deuxième combinaison étant distincte de la première combinaison.

Optionnellement, le procédé de réalisation de la série de servocommande est tel que l'étape de mise à disposition d'une pluralité de dispositifs de pilotage distincts comprend les sous-étapes suivantes :
- mise à disposition d'une pluralité de corps d'unités de pilotage, les corps étant identiques ;
- mise à disposition d'une pluralité de premiers ensembles d'accessoires électroniques, mécaniques et/ou hydrauliques et d'une pluralité de deuxièmes ensembles d'accessoires électroniques, mécaniques et/ou hydrauliques, les premiers ensembles étant distincts des deuxièmes ensembles ;
- formation d'une première unité de pilotage par installation d'un premier ensemble d'accessoires électroniques, mécaniques et/ou hydrauliques dans un corps d'unité de pilotage et sans installation d'un deuxième ensemble d'accessoires électroniques, mécaniques et/ou hydrauliques ;
- formation d'une deuxième unité de pilotage par installation d'un deuxième ensemble d'accessoires électroniques, mécaniques et/ou hydrauliques dans un corps d'unité de pilotage.

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue schématique de dessus d'un exemple d'aéronef comprenant un élément mobile et une architecture de commande de la position de l'élément mobile, selon l'invention ;
- la Figure 2 est une vue en perspective de dessus d'une servocommande selon l'invention, faisant partie de l'architecture de commande la Figure 1 ;
- la Figure 3 est une vue en coupe selon un plan de coupe marqué III sur la Figure 2 ;
- la Figure 4 est une vue agrandie d'un détail marqué IV sur la Figure 3 ;
- la Figure 5 est une vue en coupe selon un plan de coupe marqué V sur la Figure 3 ;
- la Figure 6 est une vue en perspective d'une pièce de raccord du dispositif de raccord de la servocommande de la Figure 2 ;
- la Figure 7 est une représentation schématique sur la partie gauche d'un exemple de corps d'une unité de pilotage selon l'état de la technique et sur la partie droite d'un exemple de corps d'une unité de pilotage de la servocommande de la Figure 2 ;
- la Figure 8 est un logigramme illustrant le procédé de réalisation de la servocommande de la Figure 2, selon l'invention ;
- la Figure 9 est une vue en perspective d'une ébauche d'un corps d'une unité de pilotage d'une servocommande selon l'invention, obtenue lors du procédé de réalisation de la servocommande de la Figure 8 ;
- la Figure 10 est une vue en perspective d'un corps d'une unité de pilotage d'une servocommande selon l'invention, obtenue par usinage de l'ébauche de la Figure 9 ;
- la Figure 11 est une représentation schématique d'une série de servocommandes, selon l'invention ;
- la Figure 12 est un logigramme illustrant le procédé de réalisation de la série de servocommande de la Figure 11, selon l'invention.

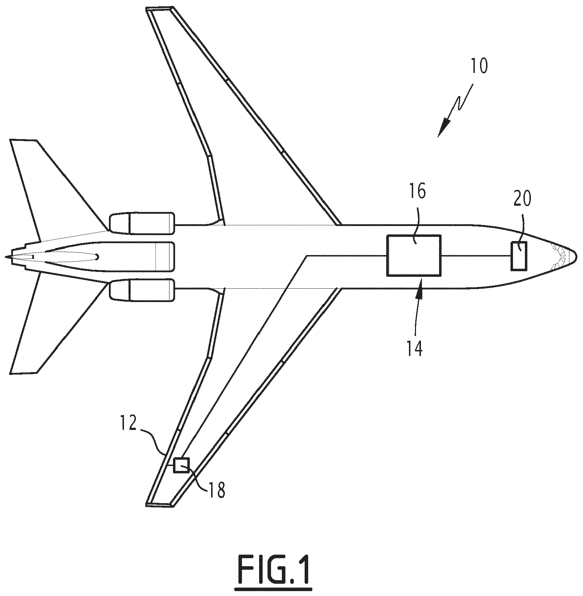

La Figure 1 illustre un aéronef 10.

L'aéronef 10 comporte au moins un élément mobile 12 et une architecture 14 de commande de la position de l'élément mobile 12, selon l'invention.

L'élément mobile 12 est par exemple déplaçable entre une pluralité de positions distinctes.

L'élément mobile 12 est par exemple une gouverne de vol de l'aéronef 10. Notamment, sur l'exemple de la Figure 1, l'élément mobile 12 est un aileron de l'aéronef 10 monté mobile sur une aile de l'aéronef 10.

Selon des exemples non-illustrés, l'élément mobile 12 est une gouverne de profondeur ou une gouverne de direction de l'aéronef 10, montée mobile sur une dérive de l'aéronef 10.

Selon un autre exemple non-illustré, l'élément mobile 12 est un volet de l'aéronef 10.

L'architecture de commande 14 comprend un dispositif 16 de génération d'une commande de déplacement de l'élément mobile 12 configuré pour générer une commande de déplacement de l'élément mobile 12 et une servocommande 18 destinée au contrôle de la position de l'élément mobile, en fonction de la commande de déplacement de l'élément mobile 12.

Avantageusement, l'architecture de commande 14 comprend en outre un système de commande 20 propre à être actionné par un pilote pour commander la position de l'élément mobile 12.

Le système de commande 20 est notamment installé dans un cockpit de l'aéronef 10.

Par exemple, le système de commande 20 comprend une manette de commande de gouvernes de vol de l'aéronef 10. Conformément à l'exemple de la Figure 1, la manette de commande est par exemple une manette de commande de l'aileron de l'aéronef 10.

Le dispositif 16 est configuré pour générer la commande de déplacement de l'élément mobile 12 en fonction d'un actionnement du système de commande 20 par le pilote.

Par exemple, le dispositif 16 est un ordinateur de bord.

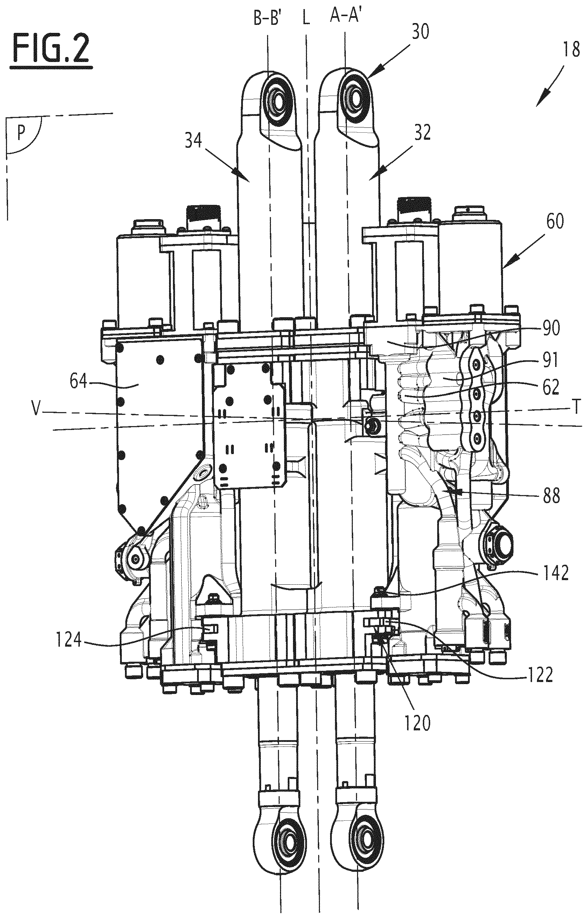

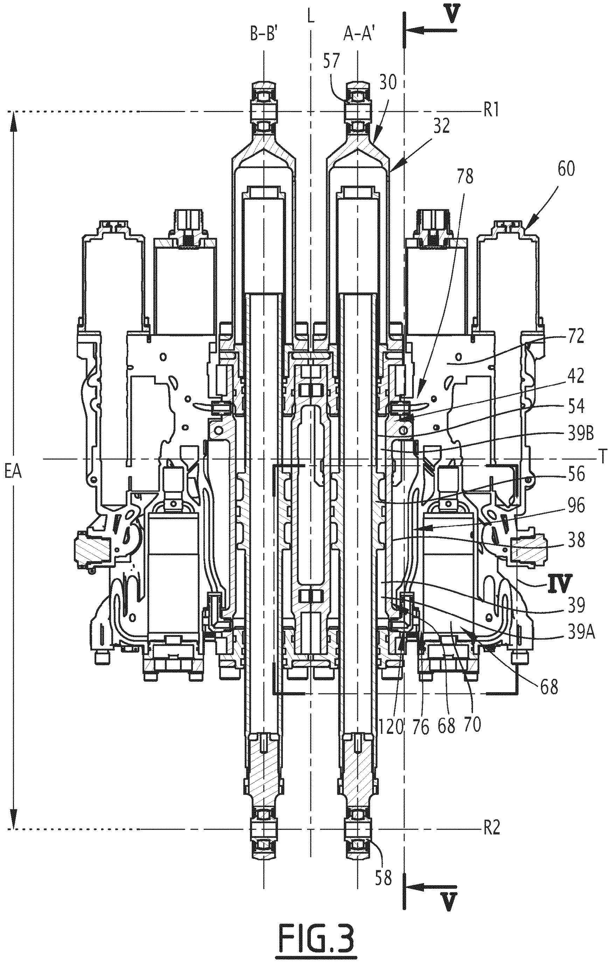

En référence aux Figures 2 et 3, la servocommande 18 comprend un dispositif de puissance 30 configuré pour déplacer l'élément mobile 12 et un dispositif de pilotage 60 configuré pour contrôler le dispositif de puissance 30 en fonction de la commande de déplacement de l'élément mobile 12 reçue depuis le dispositif 16 de l'aéronef 10.

Avantageusement, comme illustré sur les Figures 2 à 4, la servocommande 18 comprend en outre un dispositif 120 de raccord entre le dispositif de puissance 30 et le dispositif de pilotage 60.

Comme illustré sur les Figures 2 et 3, le dispositif de puissance 30 comprend au moins un vérin hydraulique 32 s'étendant selon un axe de vérin A-A'.

On définit dans la suite :
- un axe longitudinal L parallèle à l'axe de vérin A-A' ;
- un axe transversal T orthogonal à l'axe longitudinal L de sorte que la servocommande 18 s'étende sensiblement selon un plan P comprenant l'axe longitudinal L et l'axe transversal T ; et
- un axe vertical V orthogonal à l'axe longitudinal L et à l'axe transversal T.

Avantageusement, comme visible sur les Figures 2 et 3, le dispositif de puissance 30 comprend au moins un vérin hydraulique supplémentaire 34 identique au vérin hydraulique 32 et s'étendant selon un axe de vérin supplémentaire B-B' sensiblement parallèle à l'axe de vérin A-A'.

Selon l'exemple illustré sur les Figures 2 et 3, le dispositif de puissance 30 comprend exactement un vérin hydraulique 32 et un vérin hydraulique supplémentaire 34, fixés l'un à l'autre sensiblement côte à côte dans le plan P.

Dans ce qui suit, par soucis de concision, on décrit un seul vérin hydraulique 32.

Au moins une partie du vérin hydraulique 32 est réalisée en un premier matériau. Selon un exemple particulier, l'ensemble du vérin hydraulique 32 est réalisée en le premier matériau.

Avantageusement, le premier matériau est un alliage d'aluminium, notamment un alliage d'aluminium 2050, 2024 ou 7175.

Comme illustré sur l'exemple des Figures 2 à 4, le vérin hydraulique 32 comprend un cylindre 38, une tige 54 et un piston 56.

Avantageusement, le vérin hydraulique 32 comprend en outre une première rotule 57 fixe en translation selon l'axe longitudinal L et une deuxième rotule 58 solidaire de l'élément mobile 12 et mobile en translation selon l'axe longitudinal L.

Le cylindre 38 s'étend selon l'axe de vérin A-A'.

Le cylindre 38 délimite une chambre 39 et comprend au moins une première portion 40 et au moins une deuxième portion 42 de raccord entre la chambre 52 et une unité de pilotage 62 du dispositif de pilotage 60 (qui sera décrite plus loin).

La chambre 39 comprend une portion amont 39A et une portion aval 39B et est destinée à recevoir un fluide.

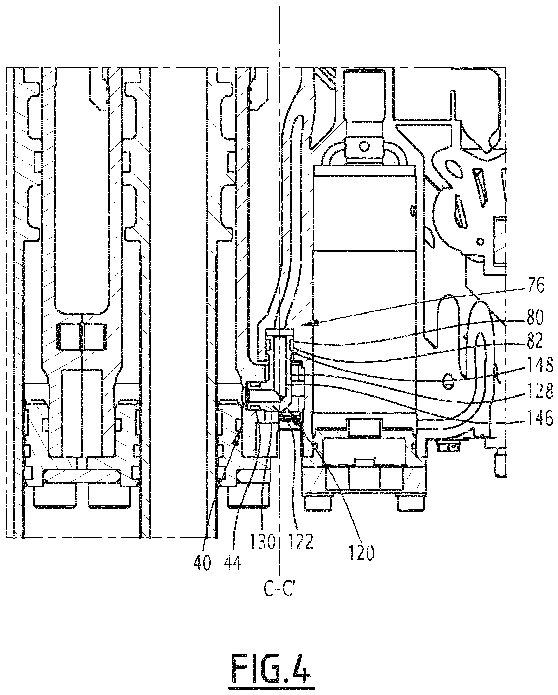

Les première 40 et deuxième 42 portions de raccord du cylindre 38 comprennent chacune une cavité cylindrique de raccord 44 reliée fluidiquement à la chambre 39 et à l'unité de pilotage 62, notamment à un réseau 96 de cavités tubulaires 98 de l'unité de pilotage (qui sera décrit plus loin). La cavité cylindrique de raccord 44 de la première portion de raccord 40 du cylindre 38 est indiquée sur la Figure 4.

Dans ce qui suit, par soucis de concision et comme illustré sur l'exemple des Figures 2 à 4, on considère que le cylindre 38 comprend une unique première portion de raccord 40 et une unique deuxième portion de raccord 42.

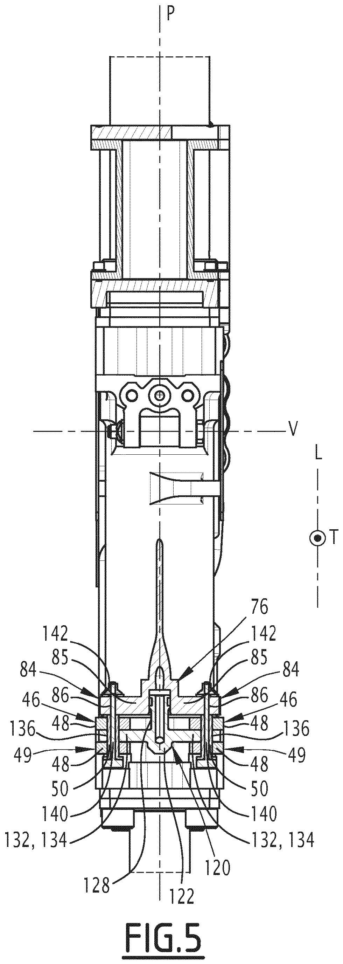

En référence à la Figure 5, la première portion de raccord 40 du cylindre 38 comprend en outre deux organes 46 de raccord avec le dispositif de raccord 120.

Les deux organes 46 sont disposés de part et d'autre du plan P.

Chaque organe de raccord 46 comprend deux plaques 48 s'étendant chacune sensiblement selon un plan parallèle à l'axe transversal T et l'axe vertical V et séparées par un espace 49 de réception d'une aile 132 d'une pièce de raccord 122 du dispositif de raccord 120. En particulier, l'espace de réception 49 est dimensionné de telle sorte que l'espacement entre les plaques 48 corresponde sensiblement à l'épaisseur de l'aile 132 mesurée selon l'axe longitudinal L.

Chaque plaque 48 comprend un orifice 50 de passage d'une vis 140 du dispositif de raccord 120.

La tige 54 s'étend selon l'axe de vérin A-A' dans la chambre 39.

Le piston 56 est monté sur la tige 54 dans la chambre 39. Avantageusement, le piston 56 est venu de matière avec la tige 54.

Le piston 56 sépare la portion amont 39A et la portion aval 39B de la chambre 39.

La première rotule 57 est fixe en translation selon l'axe longitudinal L et mobile en rotation autour d'un premier axe de rotation R1 sensiblement parallèle à l'axe transversal T. Notamment, la première rotule 57 est solidaire du cylindre 38.

La deuxième rotule 58 est mobile en translation selon l'axe longitudinal L et mobile en rotation autour d'un deuxième axe de rotation R2 sensiblement parallèle à l'axe transversal T. Notamment, la deuxième rotule 57 est solidaire du piston.

Comme visible sur la figure 3, les premier R1 et deuxième R2 axes de rotation sont séparés selon l'axe longitudinal L par une entraxe EA.

Comme illustré sur les Figures 2 et 3, le dispositif de pilotage 60 comprend au moins une unité de pilotage 62.

Avantageusement, le dispositif de pilotage 60 comprend au moins une unité de pilotage supplémentaire 64 identique à l'unité de pilotage 62 et associée à l'au moins un vérin hydraulique supplémentaire 34.

Selon l'exemple illustré sur les Figures 2 et 3, le dispositif de pilotage 60 comprend exactement une unité de pilotage 62 et une unité de pilotage supplémentaire 64.

L'unité de pilotage 62 est fixée et connectée fluidiquement, mécaniquement et électriquement au vérin hydraulique 32 et l'unité de pilotage supplémentaire 64 est fixée et connectée fluidiquement au vérin hydraulique supplémentaire 34.

Dans ce qui suit, par soucis de concision, on décrit une seule unité de pilotage 62.

L'unité de pilotage 62 comporte un ensemble 68 d'accessoires électroniques, mécaniques et/ou hydrauliques 70 et un corps 72.

Avantageusement, l'ensemble 68 d'accessoires 70 dépend de besoins spécifiques au contrôle de la position de l'élément mobile 12 particulier contrôlé par la servocommande 18. Ainsi, par exemple, pour le contrôle d'éléments mobiles 12 différents, il est prévu d'installer des ensembles 68 correspondant à des combinaisons distinctes d'accessoires 70.

Les accessoires électroniques, mécaniques et/ou hydrauliques 70 sont en communication fluidique avec le vérin hydraulique 32, notamment par l'intermédiaire d'un réseau 96 de cavités tubulaires 98 s'étendant dans le corps 72.

Avantageusement, les accessoires électroniques, mécaniques et/ou hydrauliques 70 sont agencés dans le corps 72, notamment dans des cavités d'accueil des accessoires 70.

Les accessoires 70 sont par exemple des pistons, des clapets anti-retour, des vannes, des capteurs de pression, des capteurs de débit, des capteurs de température, des distributions, des accumulateurs.

Comme illustré sur les Figures 2, 3, 4 et 7, le corps 72 délimite le réseau 96 de cavités tubulaires 98.

Avantageusement, le corps 72 comprend en outre au moins une première portion 76 de raccord entre le réseau 96 et vérin hydraulique 32, au moins une deuxième portion 78 de raccord entre le réseau 96 et le vérin hydraulique 32, au moins une portion conformée 88 et une surface externe 90.

Le corps 72 de l'unité de pilotage 62 est réalisé en un deuxième matériau distinct du premier matériau, avantageusement par fabrication additive.

Encore avantageusement, le deuxième matériau est un alliage de titane, notamment un alliage de titane TA6V.

Avantageusement, les premières 76 et deuxième 78 portions de raccord comprennent chacune une cavité cylindrique 80 de raccord en communication fluidique avec la chambre 39 du vérin hydraulique 32. La cavité cylindrique de raccord 80 de la première portion de raccord 76 est indiquée sur la Figure 4.

Dans ce qui suit, par soucis de concision et comme illustré sur l'exemple des Figures 2 à 5, on considère que le corps 72 comprend une unique première portion de raccord 76 et une unique deuxième portion de raccord 78.

Par exemple, comme illustré sur les Figures 2 à 5, la première portion de raccord 76 du corps 72 est en communication fluidique avec la première portion de raccord 40 du cylindre 38 et la deuxième portion de raccord 78 du corps 72 est en communication fluidique avec la deuxième portion de raccord 42 du cylindre 38.

Les première 76 et deuxième 78 portions de raccord du corps 72, notamment leurs cavités cylindriques de raccord 80 respectives, sont reliées par l'ensemble 68 d'accessoires 70.

En référence à la Figure 5, la première portion de raccord 76 du corps 72 comprend en outre deux organes 84 de raccord avec le dispositif de raccord 120.

La cavité cylindrique de raccord 80 de la première 76 et/ou la deuxième 78 portions de raccord du corps 72 s'étend selon un axe C-C' (visible sur la Figure 4) sensiblement parallèle à l'axe de vérin A-A'.

Selon l'exemple illustré sur les Figures 2 à 5, la cavité cylindrique de raccord 80 de la première portion de raccord 76 du corps 72 s'étend selon l'axe C-C'.

Chaque cavité cylindrique de raccord 80 est délimitée par une paroi interne 82.

Chaque organe de raccord 84 comprend une plaque 85 s'étendant sensiblement selon un plan parallèle à l'axe transversal T et l'axe vertical V, notamment parallèlement au plan d'extension des plaques 48 des organes de raccord 46 du vérin 32.

Chaque plaque 85 comprend un orifice 86 de passage d'une vis 140 du dispositif de raccord 120.

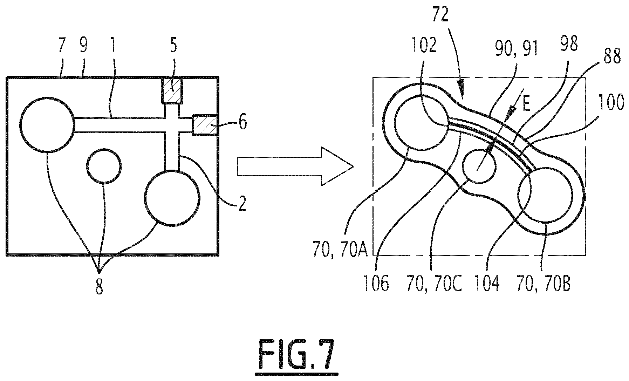

Par exemple, comme illustré sur les Figures 2 et 7, le corps 72 comprend au moins une portion conformée 88, dont une portion 91 de surface externe 90 correspondante épouse la forme d'au moins un accessoire mécanique, électronique et/ou hydraulique 70 et/ou d'au moins une cavité tubulaire 98, notamment d'au moins une cavité tubulaire 98 présentant une fibre neutre 100 courbe.

Avantageusement, comme illustré sur la partie droite de la Figure 7, la portion conformée 88 présente une épaisseur E prise orthogonalement par rapport à la portion 91 de surface externe 88 correspondante entre ladite portion de surface externe 88 et :
- la cavité tubulaire 98 la plus proche ; ou
- l'accessoire électronique, mécanique et/ou hydraulique 70 le plus proche ;
l'épaisseur E étant comprise entre 1 mm et 10 mm, de préférence entre 1 mm et 5 mm.

Comme illustré sur la Figure 7 qui compare l'invention (partie droite de la Figure 7) et l'état de la technique (partie gauche de la Figure 7), la portion conformée 88 permet un gain de masse et réduit les pertes de charge au sein de la cavité tubulaire 98. En effet, le corps 72 présente moins de matière que le corps 7 de l'état de la technique puisque dans l'invention la surface 90 épouse la forme des accessoires 70 et/ou des cavités tubulaires 98. En comparaison, dans l'état de la technique, la surface 9 du corps 7 est sensiblement plane et n'épouse pas la forme ni d'accessoires 8, ni des cavités tubulaires 1, 2.

Le réseau 96 de cavités tubulaires 98 relie fluidiquement les accessoires 70 entre eux ainsi que les accessoires 70 au vérin hydraulique 32. En particulier, le réseau 96 de cavités tubulaires 98 connecte fluidiquement les cavités cylindriques de raccord 80 des première 76 et deuxième 78 portions de raccord et les accessoires 70.

Chaque cavité tubulaire 98 s'étend entre deux extrémités 102, 104 respectivement de connexion à :
- la première portion de raccord 76, notamment la cavité cylindrique 80 de la première portion de raccord 76 ;
- la deuxième portion de raccord 78, notamment la cavité cylindrique 80 de la deuxième portion de raccord 78 ; ou
- un accessoire électronique, mécanique et/ou hydraulique 70.

La Figure 7 (partie droite) illustre un exemple dans lequel une cavité tubulaire 98, dont la fibre neutre 100 est courbe, s'étend entre une extrémité 102 de connexion à un premier accessoire électronique, mécanique et/ou hydraulique 70A et une deuxième extrémité 104 de connexion à un deuxième accessoire électronique, mécanique et/ou hydraulique 70B.

Chaque cavité tubulaire 98 est délimitée radialement par une paroi interne 106.

Chaque cavité tubulaire 98 est dépourvue d'arête vive entre ses extrémités 102, 104. La partie gauche de la Figure 7 illustre un exemple de l'état de la technique dans lequel deux cavités tubulaires 1, 2 présentent des arêtes vives entre leur extrémités 3, 4.

Au moins une cavité tubulaire 98 est dépourvue de bifurcation et/ou de piquage entre ses extrémités 102, 104. La partie gauche de la Figure 7 illustre un exemple de l'état de la technique dans lequel chaque cavité tubulaire 1, 2 présent des bifurcations et des piquages 5, 6.

Une fibre neutre 100 est définie pour chaque cavité tubulaire 98.

La fibre neutre 100 d'une cavité tubulaire 98 correspond à une ligne passant par le centre de gravité des sections droites de ladite cavité tubulaire 98.

Avantageusement, comme illustré sur la Figure 7, la fibre neutre 100 d'au moins une cavité tubulaire 98 est courbe. Une telle fibre neutre 100 courbe est notamment obtenue grâce à l'utilisation de la fabrication additive lors du procédé de réalisation de la servocommande 18 (détaillé plus loin).

Par exemple, une pluralité de cavités tubulaires 98 présentent une fibre neutre 100 courbe.

Notamment, l'au moins une cavité tubulaire 98 dont la fibre neutre 100 est courbe est dépourvue d'arête vive entre ses extrémités 102, 104 et est dépourvue de bifurcation et/ou de piquage entre ses extrémités 102, 104.

Dans ce qui suit, en se référant à la Figure 7, on décrit une seule cavité tubulaire 98 dont la fibre neutre 100 est courbe. Il est bien sûr entendu que ce qui suit s'applique à l'ensemble des cavités tubulaires 98 dont la fibre neutre 100 est courbe.

Par exemple, comme illustré sur la Figure 7, la fibre neutre courbe 100 s'étend selon le chemin le plus court entre ses deux extrémités 102, 104, le chemin le plus court étant restreint par la présence des autres cavités tubulaires 98, des accessoires 70 et de la surface externe 90. Comme illustré sur l'exemple de la Figure 7, le chemin le plus court selon lequel s'étend la fibre neutre courbe 100 est restreint par la présence de l'accessoire 70C.

Avantageusement, le rayon de courbure de la fibre neutre 100 courbe est continûment dérivable.

En référence aux Figures 2 à 5, le dispositif de raccord 120 comporte au moins une pièce 122 de raccord entre le réseau 96 de cavités tubulaires 98 de l'unité de pilotage 62 et le vérin hydraulique 32.

Avantageusement, le dispositif de raccord 120 comporte au moins une pièce de raccord supplémentaire 124 identique à la pièce de raccord 122 et raccordant le réseau 96 de cavités tubulaires 98 de l'unité de pilotage supplémentaire 64 et le vérin hydraulique supplémentaire 34.

Selon l'exemple illustré sur les Figures 2 à 5, le dispositif de raccord 120 comprend exactement une pièce de raccord 122 et une pièce de raccord supplémentaire 124.

Dans ce qui suit, par soucis de concision, on décrit une seule pièce de raccord 122. Il est bien sûr entendu que ce qui suit s'applique à l'ensemble des pièces de raccord 122, lorsque le dispositif de raccord 120 comprend une pluralité de pièces de raccord 122 et de pièces de raccord supplémentaires 124.

Avantageusement, comme visible sur la Figure 5, le dispositif de raccord 120 comprend en outre, pour chaque pièce de raccord 122, deux vis 140 et deux écrous 142.

La pièce de raccord 122 est mobile par rapport au corps 72 de l'unité de pilotage 62 et/ou par rapport au vérin hydraulique 32 pour autoriser la dilatation différentielle du corps 72 de l'unité de pilotage 62 et du vérin hydraulique 32 l'un par rapport à l'autre.

Selon l'exemple illustré sur les Figures 2 à 5, la pièce de raccord 122 est agencée de sorte à être déplaçable en translation dans la cavité cylindrique de raccord 80 de la première portion de raccord 76 lors de la dilatation différentielle du corps 72 de l'unité de pilotage 62 et du vérin hydraulique 32 l'un par rapport à l'autre.

En particulier, la pièce de raccord 122 est déplaçable en translation dans la cavité cylindrique de raccord 80 selon l'axe de vérin A-A'.

Notamment, comme illustré sur les Figures 4 à 6, la pièce de raccord 122 comprend une portion cylindrique 128 de raccord avec la cavité cylindrique 80 de la première portion de raccord 76 de l'unité de pilotage 62 et une portion cylindrique 130 de raccord avec la cavité cylindrique 44 de la première portion de raccord 40 du vérin hydraulique 32.

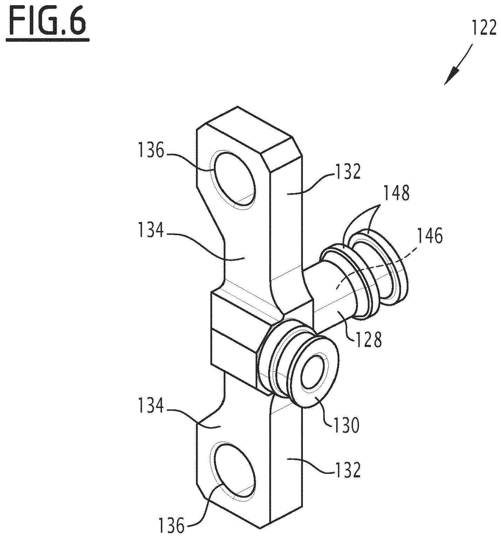

Avantageusement, comme visible sur les figures 5 et 6, la pièce de raccord 122 comprend en outre deux ailes 132 s'étendant latéralement de part et d'autre des portions cylindriques 128 et 130, notamment de part et d'autre du plan P.

La portion cylindrique de raccord 128 délimite une conduite de raccord 146 et s'étend dans la cavité cylindrique de raccord 80.

Lors de la dilatation différentielle du corps 72 de l'unité de pilotage 62 et du vérin hydraulique 32 l'un par rapport à l'autre, la portion cylindrique de raccord 128 coulisse dans la cavité cylindrique de raccord 80.

La portion cylindrique de raccord 128 comprend en outre au moins une saillie annulaire 148 s'étendant radialement à partir de la conduite de raccord 146 et coopérant avec la paroi interne 82 délimitant la cavité cylindrique de raccord 80, pour connecter de manière étanche le réseau 96 de cavités tubulaires 98 de l'unité de pilotage 62 et le vérin hydraulique 32.

En référence aux Figures 5 et 6, chaque aile 132 est formée par une plaque 134 s'étendant sensiblement selon un plan parallèle à l'axe transversal T et l'axe vertical V.

Chaque plaque 134 comprend un orifice 136 de passage de la vis 140.

Comme visible sur la Figure 5, chaque vis 140 s'étend sensiblement parallèlement à l'axe longitudinal L à travers les orifices de passages 50 des organes de raccord 46 du vérin 32, à travers l'orifice de passage 86 de l'organe de raccord 84 du corps 72 de l'unité de pilotage 62 et à travers l'orifice de passage 136 des ailes 132 de la pièce de raccord 122.

Chaque vis 140 coopère avec un écrou 142 pour solidariser le vérin hydraulique 32, la pièce de raccord 122 et l'unité de pilotage 62 tout en autorisant la translation parallèlement à l'axe longitudinal L du vérin hydraulique 32 et de l'unité de pilotage 62 l'un par rapport à l'autre.

Lors de la dilatation différentielle du corps 72 de l'unité de pilotage 62 et du vérin hydraulique 32 l'un par rapport à l'autre, la pièce de raccord 122 du dispositif de raccord 120 et les organes de raccord 46, notamment les plaques 48, coulissent ensemble le long de la vis 140 entre l'organe de raccord 84 de l'unité de pilotage 62, notamment la plaque 85, et la tête de la vis 140.

Ainsi, le dispositif de pilotage 60 et le dispositif de puissance 30 peuvent être réalisés dans des matériaux de natures et/ou de caractéristiques différentes, en s'assemblant l'un sur l'autre. La pièce de raccord 122 garantit que les dilatations différentielles susceptibles de se produire sur la gamme de températures d'utilisations de l'aéronef 10 sont compensées.

Les vis 140 constituent ainsi un élément permettant la solidarisation du vérin 32, de l'unité de pilotage 62 et de la pièce de raccord 122 et le guidage selon la direction longitudinale L du vérin hydraulique 32 relativement à l'unité de pilotage 62 lors de la dilatation différentielle.

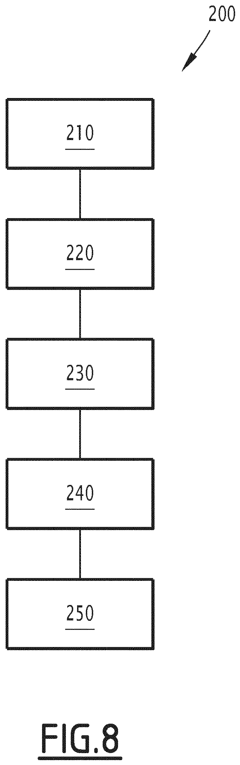

Dans ce qui suit, en référence aux Figures 8 à 10, on décrit un procédé 200 de réalisation d'une servocommande 18 telle que décrite ci-dessus.

Le procédé 200 comprend une première étape 210 de formation du vérin hydraulique 32 du dispositif de puissance 30 par exemple par usinage d'au moins un bloc du premier matériau.

Le procédé 200 comprend en outre une deuxième étape 220 de réalisation d'une ébauche 71 du corps 72 de l'unité de pilotage 62 par fabrication additive notamment à partir du deuxième matériau.

Avantageusement, l'ébauche 71 du corps 72 comprend au moins une cavité tubulaire 98 dont la fibre neutre 100 est courbe. Notamment, la deuxième étape 220 est réalisée de sorte qu'au moins une cavité tubulaire 98 présente une fibre neutre 100 courbe. En particulier, la fabrication additive permet d'obtenir une telle fibre neutre 100 courbe.

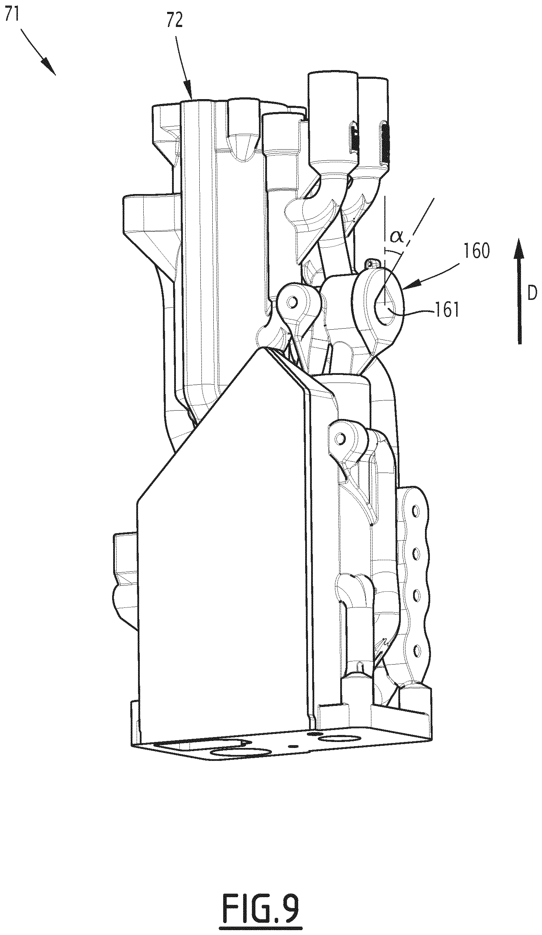

Encore avantageusement, en référence à la Figure 9, la deuxième étape 220 est dépourvue d'utilisation de supports de fabrication additive. Par « supports de fabrication additive », on entend des éléments dédiés au support de parties en porte-à-faux de l'ébauche 71. En particulier, l'ébauche 71 est autosupportée. Par « autosupportée », on entend que l'ébauche 71 est dépourvue de parties en porte-à-faux ou qu'elle présente des parties en porte-à-faux qui ne nécessitent pas de supports particuliers.

Comme illustré sur la Figure 9, l'ébauche 71 du corps 72 s'étend selon une direction principale D de l'arrière vers l'avant. La direction principale D est parallèle à l'axe de vérin A-A' lorsque le dispositif de puissance 30 et le dispositif de pilotage 60 sont assemblés.

La fabrication additive est réalisée suivant la direction principale D de l'arrière vers l'avant lors de la deuxième étape 220.

Selon l'exemple illustré sur la Figure 9, l'ébauche 71 du corps 72 présente au moins une portion 160 en porte-à faux. Par « porte-à-faux », on entend que la portion 160 ne présente pas de support immédiat en dessous de lui, c'est-à-dire en arrière selon la direction principale D.

Selon l'exemple illustré sur la Figure 9, toute surface de l'au moins une portion 160 orientée sensiblement vers l'arrière selon la direction principale D présente un angle α avec la direction principale D inférieur ou égal à 45°. Un tel angle permet notamment de s'affranchir des supports de fabrication additive.

Une portion en porte à faux 160 est indiquée sur l'exemple de la Figure 9. Cette portion en porte à faux correspond à la partie supérieure (en avant selon la direction principale D) d'une ébauche d'orifice 161. Cette partie supérieure est une portion en porte à faux puisqu'elle ne présente pas de support immédiat en dessous. La surface supérieure de l'ébauche d'orifice 161, qui est orientée sensiblement vers l'arrière selon la direction principale D, présente un angle α avec la direction principale D, comme illustré.

A nouveau en référence à la Figure 8, le procédé 200 comprend en outre une troisième étape 230 de réalisation du corps 72 de l'unité de pilotage 62 par usinage de l'ébauche 71.

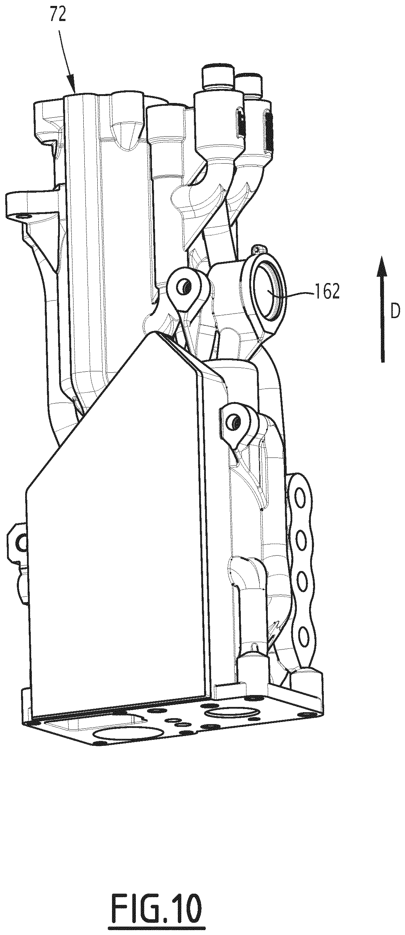

Selon l'exemple illustré sur la Figure 10, les surfaces de l'au moins une portion 160 orientées sensiblement vers l'arrière sont usinées pour leur conférer leur forme finale.

La Figure 10 illustre un exemple conforme à celui de la Figure 9, dans lequel l'ébauche d'orifice 161 de la Figure 9 a été usinée pour lui conférer sa forme finale, c'est-à-dire la forme finale d'orifice 162.

A nouveau en référence à la Figure 8, le procédé 200 comprend en outre une quatrième étape 240 de formation de l'unité de pilotage 62 du dispositif de pilotage 60 par installation des accessoires électroniques, mécanique et/ou hydrauliques 70 dans le corps 72.

Le procédé 200 comprend en outre une cinquième étape 250 d'assemblage du dispositif de puissance 30 et du dispositif de pilotage 60 pour former la servocommande 18.

Avantageusement, la cinquième étape 250 comprend l'agencement d'au moins un dispositif de raccord 120 entre le dispositif de puissance 30 et le dispositif de pilotage 60.

En particulier, l'agencement de l'au moins un dispositif de raccord 120 entre le dispositif de puissance 30 et le dispositif de pilotage 60, comprend l'agencement d'une pièce de raccord 122 entre le réseau 96 de cavités tubulaires 98 et le vérin hydraulique 32.

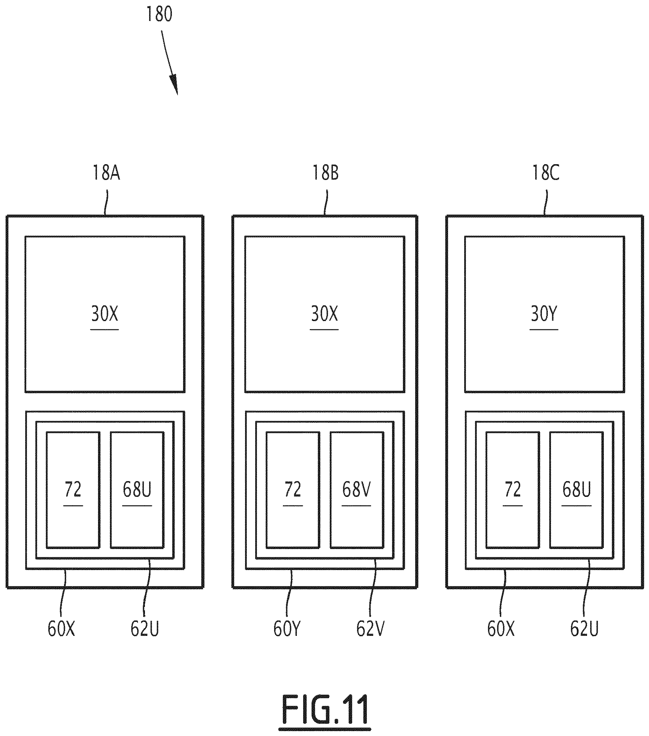

Dans ce qui suit, en référence à la Figure 11, on décrit une série 180 de servocommandes 18A, 18B, 18C, selon l'invention.

Les servocommandes 18A, 18B, 18C de la série 180 de servocommandes sont telles que décrites ci-dessus.

Chaque servocommande 18 de la série 180 de servocommandes 18A, 18B, 18C est destinée au contrôle de la position d'un élément mobile 12 de l'aéronef 10.

Chaque servocommande 18 de la série 180 de servocommandes 18A, 18B, 18C comprend un dispositif de puissance 30 et un dispositif de pilotage 60 aptes à être assemblés pour former, dans une configuration assemblée, ladite servocommande 18.

Avantageusement, la série 180 de servocommandes 18A, 18B, 18C comprend une première servocommande 18A et une deuxième servocommande 18B distincte de la première servocommande 18A.

Encore avantageusement, la série 180 de servocommandes 18A, 18B, 18C comprend une troisième servocommande 18C distincte de la première servocommande 18A.

Selon l'exemple de la Figure 11, la troisième servocommande 18C est également distincte de la deuxième servocommande 18B.

Par exemple, la première servocommande 18A est destinée au contrôle de la position d'un premier élément mobile 12, la deuxième servocommande 18B est destinée au contrôle de la position d'un deuxième élément mobile 12 distinct du premier élément mobile 12 et la troisième servocommande 18C est destinée au contrôle de la position d'un troisième élément mobile 12 distinct des premier et deuxième éléments mobiles 12.

Avantageusement, le dispositif de puissance 30X de la deuxième servocommande 18B est identique au dispositif de puissance 30X de la première servocommande 18A et le dispositif de pilotage 60Y de la deuxième servocommande 18B est différent du dispositif de pilotage 60X de la première servocommande 18A.

En particulier, l'unité de pilotage 62U de la première servocommande 18A est distincte de l'unité de pilotage 62V de la deuxième servocommande 18B.

Notamment, le corps 72 de l'unité de pilotage 62U de la première servocommande 18A est identique au corps 72 de l'unité de pilotage 62V de la deuxième servocommande 18B et l'ensemble 68U d'accessoires électroniques, mécaniques et/ou hydrauliques 70 de l'unité de pilotage 62U de la première servocommande 18A est distinct de l'ensemble 68V d'accessoires électroniques, mécaniques et/ou hydrauliques 70 de l'unité de pilotage 62V de la deuxième servocommande 18B.

En d'autres termes, les première 18A et deuxième 18B servocommandes se distinguent par l'ensemble 68 d'accessoires électroniques, mécaniques et/ou hydrauliques 70 mais comprennent des corps 72 identiques, et donc des réseaux 96 de cavités tubulaires 98 identiques.

Par exemple, le dispositif de puissance 30Y de la troisième servocommande 18C est différent du dispositif de puissance 30X de la première servocommande 18A et le dispositif de pilotage 60X de la troisième servocommande 18C est identique au dispositif de pilotage 60X de la première servocommande 18A.

Notamment, le dispositif de puissance 30X de la première servocommande 18A présente au moins une caractéristique différenciante par rapport au dispositif de puissance 30Y de la troisième servocommande 18C.

Avantageusement, l'au moins une caractéristique différenciante est prise dans la liste de caractéristiques différenciantes suivante :
- le diamètre du vérin hydraulique 32 ;
- la course du vérin hydraulique 32 ; et
- l'entraxe EA.

En particulier, le diamètre du vérin hydraulique 32 correspond au diamètre du cylindre 38.

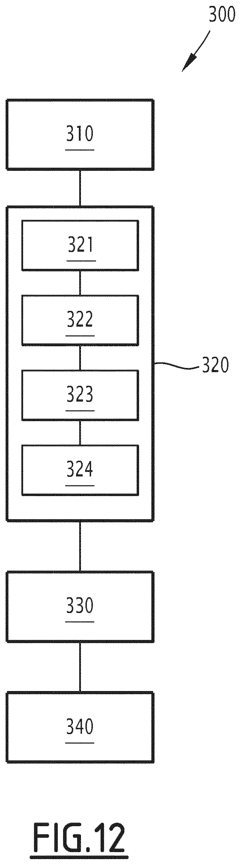

Dans ce qui suit, en référence à la Figure 12, on décrit un procédé 300 de réalisation d'une série 180 de servocommandes 18A, 18B, 18C telle que décrite ci-dessus.

Le procédé 300 comprend une première étape 310 de mise à disposition d'une pluralité de dispositifs de puissances 30X, 30Y distincts.

Le procédé 300 comprend en outre une deuxième étape 320 de mise à disposition d'une pluralité de dispositifs de pilotage 60X, 60Y distincts.

Avantageusement, en référence à la Figure 12, la deuxième étape 320 comprend une première sous-étape 321 de mise à disposition d'une pluralité de corps 72 d'unités de pilotage 62 identiques.

La deuxième étape 320 comprend en outre une deuxième sous-étape 322 de mise à disposition d'une pluralité de premiers ensembles 68U d'accessoires électroniques, mécaniques et/ou hydrauliques 70 et d'une pluralité de deuxième ensembles 68V d'accessoires électroniques, mécaniques et/ou hydrauliques 70. Les premiers ensembles 68U sont distincts des deuxièmes ensembles 68V.

La deuxième étape 320 comprend en outre une troisième sous-étape 323 de formation d'une première unité de pilotage 62U par installation d'un premier ensemble 68U d'accessoires électroniques, mécaniques et/ou hydrauliques 70 dans un corps 72 d'unité de pilotage 62 et sans installation d'un deuxième ensemble 68V d'accessoires électroniques, mécaniques et/ou hydrauliques 70.

La deuxième étape 320 comprend en outre une quatrième étape 324 de formation d'une deuxième unité de pilotage 62V par installation d'un deuxième ensemble 68V d'accessoires électroniques, mécaniques et/ou hydrauliques 70 dans un corps 72 d'unité de pilotage 62, par exemple sans installation d'un premier ensemble 68U d'accessoires électroniques, mécaniques et/ou hydrauliques 70.

Toujours en référence à la Figure 12, le procédé 300 comprend en outre une troisième étape 330 d'assemblage d'une première combinaison d'un dispositif de puissance 30 parmi la pluralité de dispositifs de puissance distincts 30X, 30Y, 30Z et d'un dispositif de pilotage 60 parmi la pluralité de dispositifs de pilotage distincts 60X, 60Y, 60Z pour former une première servocommande 18A.

Le procédé 300 comprend en outre une quatrième étape 340 d'assemblage d'une deuxième combinaison d'un dispositif de puissance 30 parmi la pluralité de dispositifs de puissance distincts 30X, 30Y, 30Z et d'un dispositif de pilotage 60 parmi la pluralité de dispositifs de pilotage distincts 60X, 60Y, 60Z pour former une deuxième servocommande 18B. La deuxième combinaison est distincte de la première combinaison.

Selon un autre mode de réalisation, le premier matériau est un acier, notamment un acier inoxydable ou un alliage de titane.

Selon encore un autre mode de réalisation, le deuxième matériau est un acier, notamment un acier inoxydable, un inconel^{™} ou un alliage d'aluminium.

Selon encore un autre mode de réalisation, le dispositif 16 de génération de la commande de déplacement de l'élément mobile 12 est une tringlerie mécanique.

Grâce à l'invention, la servocommande 18 offre une adaptabilité et une modularité améliorée en fonction de l'élément mobile 12 à contrôler par l'utilisation de deux matériaux distincts respectivement pour le vérin hydraulique 32 et pour l'unité de pilotage 62.

La servocommande 18 permet des gains de masse et des gains de cycle de fabrication (économie de temps).

L'utilisation de la fabrication additive pour la réalisation du corps 72 de l'unité de pilotage 62, et notamment le fait que le corps 72 présente au moins une cavité tubulaire 98 dont la fibre neutre 100 est courbe, permet de rendre plus compact le réseau 96 de cavités tubulaires 98, et donc de réduire la masse et l'encombrement du corps 72.

Le fait que le corps 72 comprenne une portion conformée, également obtenue grâce à l'utilisation de la fabrication additive, réduit encore la masse et l'encombrement du corps 72.

L'utilisation d'un alliage d'aluminium pour le vérin hydraulique 32 et d'un alliage de titane pour l'unité de pilotage 62 permet d'obtenir un compromis particulièrement satisfaisant entre légèreté et fiabilité (résistance mécanique notamment).

Grâce au dispositif de raccord 120, notamment grâce à la pièce de raccord 122, la dilatation différentielle du corps 72 de l'unité de pilotage 62 et du vérin hydraulique 32 l'un par rapport à l'autre est autorisé, ce qui réduit les contraintes subies par la servocommande 18 et rallonge donc sa durée de vie.

Enfin, l'invention permet de réaliser aisément une multitude de servocommandes 18 en fonction d'élément mobiles 12 variés à contrôler. Les servocommandes de la série 180 selon l'invention se distinguent de par leur dispositif de puissance et/ou de par leur dispositif de pilotage.

Le fait d'utiliser un seul corps 72 identique pour chaque servocommande 18 de la série 180, facilite la réalisation de la série.

## Revendications

1. Servocommande (18) destinée au contrôle de la position d'un élément mobile (12) d'un aéronef (10), comprenant :
- un dispositif de puissance (30) configuré pour déplacer l'élément mobile (12), le dispositif de puissance (30) comprenant au moins un vérin hydraulique (32) s'étendant selon un axe de vérin (A-A') ; et
- un dispositif de pilotage (60) configuré pour contrôler le dispositif de puissance (30) en fonction d'une commande de déplacement de l'élément mobile (12) reçue depuis un dispositif (16) de génération de la commande de déplacement de l'élément mobile (12), le dispositif de pilotage (60) comprenant au moins une unité de pilotage (62) comportant :
+ un ensemble (68) d'accessoires électroniques, mécaniques et/ou hydrauliques (70) en communication fluidique avec le vérin hydraulique ; et
+ un corps (72) délimitant un réseau (96) de cavités tubulaires (98) connectant fluidiquement les accessoires électroniques, mécaniques et/ou hydraulique (70) ainsi que le vérin hydraulique (32), le corps (72) comprenant une surface externe (90), au moins une première portion (76) de raccord entre le réseau (96) et le vérin hydraulique (32) et au moins une deuxième portion (78) de raccord entre le réseau (96) et le vérin hydraulique (32), une fibre neutre (100) étant définie pour chaque cavité tubulaire (98) ;
**caractérisée en ce que** la fibre neutre (100) d'au moins une cavité tubulaire (98) est courbe.

2. Servocommande (18) selon la revendication 1, dans laquelle le corps (72) de l'au moins une unité de pilotage (62) est réalisé par fabrication additive.

3. Servocommande (18) selon la revendication 1 ou 2, dans laquelle au moins une partie du vérin (32) est réalisée en un premier matériau, le corps (72) de l'au moins une unité de pilotage (62) étant réalisé en un deuxième matériau distinct du premier matériau.

4. Servocommande (18) selon la revendication 3, dans laquelle le premier matériau est un alliage d'aluminium, le deuxième matériau étant un alliage de titane.

5. Servocommande (18) selon l'une quelconque des revendications précédentes, dans laquelle le rayon de courbure de l'au moins une fibre neutre (100) courbe est continûment dérivable.

6. Servocommande (18) selon l'une quelconque des revendications précédentes, dans laquelle chaque cavité tubulaire (98) est dépourvue d'arête vive entre ses extrémités (102, 104).

7. Servocommande (18) selon l'une quelconque des revendications précédentes, dans laquelle au moins une cavité tubulaire (98), notamment l'au moins une cavité tubulaire (98) dont la fibre neutre est courbe, est dépourvue de bifurcation et/ou de piquage entre ses extrémités (102, 104).

8. Servocommande (18) selon l'une quelconque des revendications précédentes, dans laquelle chaque cavité tubulaire (98) s'étend entre deux extrémités (102, 104) respectivement de connexion à :
- l'au moins une première portion de raccord (76) ;
- l'au moins une deuxième portion de raccord (78) ; ou
- un accessoire électronique, mécanique et/ou hydraulique (70) ;
l'au moins une fibre neutre (100) courbe s'étendant selon le chemin le plus court entre ses deux extrémités (102, 104), le chemin le plus court étant restreint par la présence des autres cavités tubulaires (98), des accessoires électroniques, mécaniques et/ou hydrauliques (70) et de la surface externe (90).

9. Servocommande (18) selon l'une quelconque des revendications précédentes, dans laquelle le corps (72) comprend au moins une portion conformée (88), la surface externe (90) de la portion conformée (88) épousant la forme d'au moins un accessoire électronique, mécanique et/ou hydraulique (70) et/ou d'au moins une cavité tubulaire (98), notamment de l'au moins une cavité tubulaire (98) dont la fibre neutre (100) est courbe.

10. Servocommande (18) selon la revendication 9, dans laquelle la portion conformée (88) du corps (72) présente une épaisseur (E), prise orthogonalement par rapport à la surface externe (90) de la portion conformée (88) entre la surface externe (90) et :
- la cavité tubulaire (98) la plus proche ; ou
- l'accessoire électronique, mécanique et/ou hydraulique (70) le plus proche ;
l'épaisseur (E) étant comprise entre 1 mm et 10 mm, de préférence entre 1 mm et 5 mm.

11. Architecture (14) de commande de la position d'un élément mobile (12) d'un aéronef (10), comprenant :
- un dispositif (16) de génération d'une commande de déplacement de l'élément mobile (12) configuré pour générer une commande de déplacement de l'élément mobile (12) ; et
- une servocommande (18) selon l'une quelconque des revendications précédentes, destinée au contrôle de la position de l'élément mobile (12), en fonction de la commande de déplacement de l'élément mobile (12).

12. Procédé (200) de réalisation d'une servocommande (18) selon l'une quelconque des revendications 1 à 10, comprenant les étapes suivantes :
- formation (210) d'au moins un vérin hydraulique du dispositif de puissance (30) ;
- réalisation (220) d'une ébauche (71) du corps (72) de l'au moins une unité de pilotage (62) par fabrication additive de sorte qu'au moins une cavité tubulaire (98) présente une fibre neutre (100) courbe ;
- réalisation (230) du corps (72) de l'au moins une unité de pilotage (62) par usinage de l'ébauche (71) ;
- formation (240) de l'au moins unité de pilotage (62) du dispositif de pilotage (60) par installation des accessoires électroniques, mécaniques et/ou hydrauliques (70) dans le corps (72) ;
- assemblage (250) du dispositif de puissance (30) et du dispositif de pilotage (60) pour former la servocommande (18).

13. Procédé (200) selon la revendication 12, dans lequel l'étape (220) de réalisation de l'ébauche (71) du corps (72) de l'au moins une unité de pilotage (62) est dépourvue d'utilisation de support de fabrication additive.

14. Procédé (200) selon la revendication 13, dans lequel l'ébauche (71) du corps (72) s'étend selon une direction principale (D) de l'arrière vers l'avant, la direction principale (D) étant parallèle à l'axe de vérin (A-A') lorsque le dispositif de puissance (30) et le dispositif de pilotage (60) sont assemblés,
la fabrication additive étant réalisée suivant la direction principale (D) de l'arrière vers l'avant lors de l'étape (220) de réalisation de l'ébauche (71) du corps (72) de l'au moins une unité de pilotage (62),
l'ébauche (71) du corps (72) présentant au moins portion (160) en porte-à-faux,
toute surface de l'au moins une portion (160) en porte-à-faux orientée sensiblement vers l'arrière par rapport à la direction principale (D) présentant un angle (α) avec la direction principale (D) inférieur ou égal à 45°.

15. Procédé (200) selon la revendication 14, dans lequel, lors de la réalisation (230) du corps (72) de l'au moins une unité de pilotage (62), les surfaces de l'au moins une portion en porte-à-faux (160) orientées sensiblement vers l'arrière par rapport à la direction principale (D) sont usinées pour leur conférer leur forme finale.
